# EUROPÄISCHE PATENTSCHRIFT

(11) **EP 2 216 635 B1**
(45) Veröffentlichungstag und Bekanntmachung des Hinweises auf die Patenterteilung: **17.07.2019**
(21) Anmeldenummer: 09152278.9
(22) Anmeldetag: 06.02.2009
(51) Int. Cl.: G01G 23/01

(54) **Kalibriervorrichtung für eine Kraftmessvorrichtung und Kraftmessvorrichtung**
Calibrating device for a power measurement device and power measurement device
Dispositif de calibrage pour un dispositif de mesure de force et dispositif de mesure de force

(43) Veröffentlichungstag der Anmeldung: 11.08.2010
(73) Patentinhaber: Mettler-Toledo GmbH, 8606 Greifensee (CH)
(72) Erfinder: Fankhauser, George, 8703, Erlenbach (CH); Uster, Markus, 8606, Nänikon (CH); Heusser, Martin, 8802, Kilchberg (CH); Schneider, Ferdinand, 8406, Winterthur (CH)
(74) Vertreter: Mettler-Toledo

(56) Entgegenhaltungen:
- EP-A- 0 424 773
- EP-A- 1 752 746
- EP-A- 1 873 504
- DE-A1- 3 639 521
- DE-A1- 3 714 540
- DE-A1-102007 036 214

## Beschreibung

Die vorliegende Erfindung betrifft eine Kalibriervorrichtung für eine Kraftmessvorrichtung, insbesondere eine Waage, und eine dazu geeignete Kraftmessvorrichtung.

Üblicherweise umfasst eine Kraftmessvorrichtung eine Kraftaufnahme, eine Kraftübertragung, eine Kraftmesszelle und eine Vorrichtung zur Verarbeitung der Messsignale. Dabei wird eine zu messende Kraft mittels der Kraftaufnahme aufgenommen, über die Kraftübertragung an die Kraftmesszelle weitergeleitet, wo sie als zugeführte Kraft auf die Kraftmesszelle wirkt. Beispielsweise ergibt sich bei einer Wägevorrichtung die zu messende Kraft durch die Gewichtskraft des Wägeguts, welche auf die Kraftaufnahme in Form einer Waagschale und über die Kraftübertragung in Form eines Gestänges auf die Kraftmesszelle, die sogenannte Wägezelle, einwirkt.

Die Kraftmesszelle ist ein mechanisch-elektrischer Wandler, welcher die zugeführte Kraft in ein elektrisches Messsignal wandelt. Dieses zur einwirkenden Kraft korrespondierende Messsignal wird an eine Verarbeitungseinheit weitergeleitet und dort verarbeitet und ausgewertet. Die Ergebnisse der Verarbeitung werden als Messwerte an eine Anzeigeeinheit oder an eine weitere Verarbeitungseinheit, beispielsweise an einen Leitrechner oder an eine Anlagensteuerung, weitergeleitet.

Um eine hohe und gleichbleibende Genauigkeit zu gewährleisten ist von Zeit zu Zeit ein Korrekturvorgang, eine sogenannte Kalibrierung, notwendig. Dabei wird der Kraftmesszelle eine vorgegebene Kraft zugeführt, sodass die Kraftmesszelle ein Messsignal erzeugt, welches zu der vorgegebenen Kraft korrespondiert und welches an die Verarbeitungseinheit weitergeleitet wird. Aus einem Vergleich zwischen einer vorgegebenen Kraft und den daraus ermittelten Messwerten können dann entsprechende Korrekturmassnahmen getroffen werden, beispielsweise die Anpassung der Berechnungsparameter in der Verarbeitungseinheit.

Zur Erzeugung der vorgegebenen Kraft und zur Zuführung dieser Kraft an die Kraftmesszelle wird oftmals eine sogenannte Kalibriervorrichtung eingesetzt. Dabei wird die Kalibriervorrichtung während eines Kalibriervorgangs an die Kraftmesszelle kraftschlüssig gekoppelt und die von der Kalibriervorrichtung erzeugte Kraft auf die Kraftmesszelle übertragen. Im Anschluss an den Kalibriervorgang wird die Kopplung getrennt, so dass die Kraftmesszelle während des normalen Messbetriebs von der Kalibriervorrichtung getrennt ist.

Die DE 10 2007 036 214 A1 offenbart eine sogenannte Normalbelastungsmaschine zur Kalibrierung von verschiedensten Kraftmessvorrichtungen, beispielsweise in einem nationalen Laboratorium. Die beschriebene Maschine weist eine Druckplatte auf, die einen zu kalibrierenden Kraftaufnehmer tragen kann, sowie ein Gestell mit vorgegebenen Gewichten, die von aussen mit dieser Kraftmessvorrichtung einzeln oder in beliebiger Kombination in Verbindung gebracht werden können. Das Auflegen und Abnehmen der Gewichte erfolgt mittels eines pneumatischen Betätigungselementsystems, wobei dieses insbesondere auch zur automatischen Steuerung befähigt sein kann. Dabei ist der elektrische Ausgang des Kraftaufnehmers, z.B. einer Kraftmesszelle, an das Steuerungssystem angeschlossen. Die automatische Steuerung erfolgt interaktiv vermittels einer menügesteuerten, anwendungsspezifischen Software. Vor Beginn der Kalibrierung sind vom Bediener Parameter sowohl die Kraftmesszelle als auch den Kalibriervorgang betreffend einzugeben. Die Auswahl der Gewichte kann dann ebenfalls automatisch erfolgen, ebenso wie die Auswertung und Ausgabe eines Kalibrierberichts.Kalibriervorrichtungen sind aus dem Stand der Technik bekannt. Beispielsweise offenbart CH 676 750 A5 eine Kalibriervorrichtung mit einem vorgegebenen Kalibriergewicht, welches durch eine Hubvorrichtung auf einen an die Kraftmesszelle gekoppelten Träger abgesenkt und damit an die Kraftmesszelle angekoppelt werden kann. Dabei wird zu Beginn des Kalibriervorgangs mit einem Elektromotor und einer drehbare Spindel das Kalibriergewicht in vertikaler Richtung abgesenkt und nach dem Kalibriervorgang wieder angehoben. Die Hubvorrichtung kann als autonome Einheit ausgebildet sein und für den Einsatz von verschieden grossen Kalibriergewichten angepasst werden. Allerdings kann diese Kalibriervorrichtung nur in beschränktem Mass an unterschiedliche Kraftmessvorrichtungen oder spezifische Anforderungen angepasst werden. Wünschenswert ist jedoch eine flexible und einfache Anpassung der Kalibriervorrichtung an die Anforderungen des jeweiligen Einsatzgebietes.

Dokument EP0424773 zeigt eine Kraftmessvorrichtung mit einer Kalibriervorrichtung mit einer Kalibrier-Kontrolleinheit.

Der vorliegenden Erfindung liegt daher die Aufgabe zugrunde, eine Kalibriervorrichtung und eine Kraftmessvorrichtung anzugeben, welche auf einfache Weise an unterschiedliche Anforderungen angepasst werden können. Des Weiteren soll ein einfacher und kostengünstiger Aufbau und Betrieb der Kraftmessvorrichtung erreicht werden, bei gleichzeitiger Erfüllung von hohen Anforderungen bezüglich Messgenauigkeit und Stabilität.

Diese Aufgabe wird mit einer Kalibriervorrichtung gelöst, welche die im unabhängigen Anspruch angegebenen Merkmale aufweist. Vorteilhafte Ausgestaltungen der Erfindung sind in den weiteren, abhängigen Ansprüchen angegeben.

Die Erfindung betrifft eine Kraftmessvorrichtung mit einer Kraftmesszelle, einer Verarbeitungseinheit und einer Kalibriervorrichtung, wobei die Kalibriervorrichtung mit einem elektrisch steuerbaren Krafterzeugungsmittel versehen ist, welches derart an eine Kraftmesszelle einer Kraftmessvorrichtung koppelbar ist, dass der Kraftmesszelle eine vorgegebene Kraft zugeführt werden kann, sodass die Kraftmesszelle ein Messsignal erzeugt, welches zur zugeführten Kraft korrespondiert und welches an die Verarbeitungseinheit weitergeleitet und dort bezüglich der vorgegebenen Kraft verarbeitet werden kann. Dabei ist die Kalibriervorrichtung eine funktionale Einheit innerhalb der Kraftmessvorrichtung, weist eine Kalibrier-Kontrolleinheit auf, welcher mindestens ein vorgegebener, die Kraftmessvorrichtung und/oder die Kalibriervorrichtung charakterisierender Parameter zur Verfügung steht, wobei die Kalibrier-Kontrolleinheit über eine Kommunikationsverbindung mit der Verarbeitungseinheit verbindbar ist, um mit dieser Informationssignale auszutauschen, und die Kalibrier-Kontrolleinheit dazu ausgebildet ist, anhand der Informationssignale und des Parameters Steuersignale zu erzeugen, um damit das Krafterzeugungsmittel zu steuern. Dadurch wird der Austausch der Kalibriervorrichtung wesentlich erleichtert, so dass diese auf einfache und flexible Weise an die unterschiedlichsten Anforderungen angepasst werden kann, beispielsweise an unterschiedliche Typen von Kraftmessvorrichtungen oder an spezifische Anforderungen des jeweiligen Einsatzgebiets, insbesondere bezüglich Genauigkeit, Stabilität oder Kosten.

Unter dem Begriff des Parameters ist ein beliebiger Wert, eine Grösse oder eine Gruppe von diesen zu verstehen. Dieser Parameter oder die Parametergruppe kann alle wesentlichen Grössen oder nur eine Teilmenge von jenen Werten umfassen, die die Kraftmessvorrichtung und/oder die Kalibriervorrichtung charakterisieren. Dabei können die Grössen genereller Natur sein, beispielsweise eine Typen-, Modell-, Design-Bezeichnung oder eine Versionsnummer. Sie können auch spezifische Grössen umfassen, beispielsweise Kennwerte bezüglich des Betriebsverhaltens oder des Betriebszustands der Kraftmessvorrichtung oder der Kalibriervorrichtung oder die geometrischen Verhältnisse betreffend die Ankopplung der Kalibriervorrichtung an die Kraftmessvorrichtung.

Besonders vorteilhaft ist, dass die Besonderheiten des Krafterzeugungsmittels und das Zusammenwirken dessen einzelner Komponenten durch die Kalibrier-Kontrolleinheit zentral gesteuert und überwacht werden. Dadurch können lokal, das heisst innerhalb der Kalibriervorrichtung, systembedingte Abweichungen, charakteristische Betriebsabläufe und Fertigungstoleranzen korrigiert und/oder kompensiert werden. Beispielsweise können diese Abweichungen durch Unterschiede in der Charakteristik des Antriebsmotors, dessen Betriebseigenschaften oder fertigungsbedingte Unterschiede des Kalibriergewichts gegeben sein. Diese Informationen können in der Kalibrier-Kontrolleinheit verarbeitet werden, sie können aber auch an die Verarbeitungseinheit kommuniziert werden, so dass diese Unterschiede dort bei der Berechnung der Korrekturparameter berücksichtigt werden können.

Überraschenderweise zeigt sich, dass durch die Kalibrier-Kontrolleinheit eine sehr hohe Flexibilität bei der Anpassung der Kraftmessvorrichtung an eine breite Palette von unterschiedlichen Anforderungen erreicht werden kann. Beispielsweise wird dadurch, dass das Betriebsverhalten des Krafterzeugungsmittels direkt durch die Kalibrier-Kontrolleinheit kontrolliert und/oder gesteuert wird, eine weitgehende Entkopplung von externen Einflüssen und Abhängigkeiten erreicht. So beeinflussen Modelländerungen des Krafterzeugungsmittels nur die zugehörige Kalibrier-Kontrolleinheit, nicht jedoch die Verarbeitungseinheit.

Ausserdem zeigt sich, dass trotz des Mehraufwands, der sich durch die zusätzliche Kalibrier-Kontrolleinheit ergibt, eine insgesamt kostengünstige Kalibriervorrichtung realisiert werden kann. So kann eine grosse Anzahl von identischen Kraftmessvorrichtungen auf kostengünstige Weise hergestellt und ausgeliefert werden, welche dann erst kurz vor Auslieferung an die kundenspezifischen Anforderungen angepasst werden. Dadurch ergeben sich wesentliche Einsparungen bei der Logistik und Organisation des Vertriebs.

Des Weiteren ermöglicht die direkte Zuordnung des Krafterzeugungsmittels mit der Kalibrier-Kontrolleinheit eine optimale Abstimmung dieser Komponenten. So kann die Kalibrier-Kontrolleinheit bei der Erzeugung der Steuersignale die charakteristischen Eigenschaften des Krafterzeugungsmittels auf spezifische Weise berücksichtigen. Zum Beispiel können völlig unterschiedliche Technologien für das Krafterzeugungsmittel eingesetzt werden, ohne dass es dazu Anpassungen bei der Kraftmessvorrichtung bedarf. So kann, je nach kundenspezifischen Anforderungen, die vorgegebene Kraft durch eine Gewichtskraft oder durch ein anderes Prinzip erzeugt werden, beispielsweise gemäss dem Prinzip des piezoelektrischen Effekts.

Ferner kann bei dem elektrisch gesteuerten Krafterzeugungsmittel das Steuersignal optimal auf dieses abgestimmt werden. So kann beispielsweise bei einem Krafterzeugungsmittel, welches ein durch einen Elektromotor bewegbares Kalibriergewicht aufweist, bei der Erzeugung der Steuersignale der Typ des Elektromotors und dessen Charakteristik berücksichtigt werden. Ausserdem können Parameter wie der Fahrweg, die optimale Beschleunigung und die Geschwindigkeit des Kalibriergewichts mit einfliessen. Solche Parameter können auch in Form einer beliebigen mathematischen Funktion oder eines vorgegebenen zeitlich Verlaufs definiert werden.

Zur Bewegung des Kalibriergewichts sind auch andere Mechanismen einsetzbar, beispielsweise ein pneumatischer Antrieb oder Hubvorrichtung welche auf dem Prinzip des piezoelektrischen Effekts basiert. Dabei kann die Kalibrier-Kontrolleinheit die charakteristischen Betriebsdaten dieser Antriebe heranziehen und als Parameter bei der Erzeugung der Steuersignale einbinden.

Ausserdem kann die Kalibrier-Kontrolleinheit für den Fall, dass Fehler während des Betriebs, insbesondere während eines Kalibriervorgangs, festgestellt werden entsprechende Meldungen in Form von Warnhinweisen von der Kalibriervorrichtung an die Verarbeitungseinheit übermitteln. Auch in diesem Fall können einheitliche Formen von Fehlermeldungen die Austauschbarkeit wesentlich verbessern.

Die erfindungsgemässe Kalibriervorrichtung ist nicht auf eine bestimmte Art von Kraftmessvorrichtung beschränkt, sondern kann universell für eine Vielzahl von unterschiedlichen Kraftmessvorrichtungen eingesetzt werden. Insbesondere kann die Kalibriervorrichtung für Kraftmessvorrichtungen verwendet werden, welche auf dem Prinzip der Deformationsmessung mittels Dehnmessstreifen oder auf dem Prinzip der elektromagnetischen Kraftkompensation basieren.

In einer vorteilhaften Ausgestaltung der Erfindung weist die Kalibrier-Kontrolleinheit ein fest vorgegebenes oder ein veränderbares Programm auf, mit dem der mindestens eine Parameter und die Informationssignale verarbeitet und die Steuersignale erzeugt werden können. Dadurch kann die Kontrolleinheit auf flexible Weise an neue Einsatzaufgaben und Änderungen der Signalverarbeitung angepasst werden. Vorzugsweise kann das Programm unter der Kontrolle der Verarbeitungseinheit verändert, umprogrammiert oder ausgetauscht werden.

In einer weiteren vorteilhaften Ausgestaltung weist die Kalibrier-Kontrolleinheit ein Speicherelement zur Speicherung des Parameters auf und/oder die Kalibrier-Kontrolleinheit ist dazu ausgebildet, den Parameter durch den Austausch der Informationssignale von der Verarbeitungseinheit zu empfangen. Dadurch kann der Parameter auf einfache Weise an neue Betriebsbedingungen angepasst werden. Beispielsweise kann in einer Initialisierungsphase der Kraftmessvorrichtung der Parameter bestimmt und an die Kalibrier-Kontrolleinheit übertragen und dort flüchtig gehalten oder in den Speicher abgelegt werden. Mit Vorteil ist das Speicherelement als nicht-flüchtiger Speicher ausgebildet, sodass trotz eines Unterbruchs der Stromversorgung, zum Beispiel beim Wechsel der Kalibriervorrichtung, ein Datenverlust vermieden werden kann.

Vorzugsweise charakterisiert der Parameter den Typ der Kraftmessvorrichtung oder das Funktionsprinzip oder den Messbereich oder die Messgenauigkeit oder die Stabilität der Messungen oder das vorgesehene Einsatzgebiet der Kraftmessvorrichtung. Der Parameter kann ausserdem den Typ oder die Funktionsweise der Kalibriervorrichtung charakterisieren, insbesondere mindestens eine räumlichen Dimension, welche die Ankopplung des Krafterzeugungsmittels an die Kraftmesszelle definiert. Ausserdem kann der Parameter den Typ des Krafterzeugungsmittels, insbesondere dessen Funktionsprinzip oder die Grösse der zu erzeugenden Kraft oder deren Änderungsgeschwindigkeit oder deren Änderungsbeschleunigung oder die Grösse des Verfahrwegs charakterisieren.

Selbstverständlich sind auch beliebige Kombinationen, als Satz oder Gruppe von verschiedenen Parametern denkbar. Dabei kann ein Parametersatz jeweils verschiedene der genannten Kategorien und Unterkategorien kombinieren. Beispielsweise kann ein Parametersatz die Grösse des Messbereichs der Kraftmessvorrichtung, das Drehmoment des Antriebsmotors, die maximale Aufsetz-Geschwindigkeit bei der Ankopplung und die Grösse der maximal zulässigen Vibrationsstörungen umfassen.

In einer vorteilhaften Ausgestaltung der Erfindung ist die Kalibrier-Kontrolleinheit dazu ausgebildet, ein analoges Steuersignal zu erzeugen, welches über eine Steuerleitung an das Krafterzeugungsmittel übertragen wird, um dieses zu steuern, wobei das Steuersignal zu den Informationssignalen (S_{CD}) und/oder zu internen, durch die Kalibriervorrichtung (40) ermittelten Ereignissen korrespondiert. Durch diese Steuerung können sowohl generische und/oder standardisierte Steuerinformationen als auch die intern ermittelten Informationen auf effiziente Weise zur direkten und spezifischen Steuerung des Krafterzeugungsmittels eingesetzt werden.

In einer weiteren vorteilhaften Ausgestaltung ist die Kalibrier-Kontrolleinheit zum Austausch der Informationssignale in digitaler und/oder codierter Form und/oder in bidirektionaler Richtung und/oder in paketförmiger Weise und/oder zum Anschluss an ein Bussystem ausgebildet. Dadurch kann eine effiziente und gegenüber Störungen sehr robuste Übertragung der Informationssignale erreicht werden. Zudem können weitere Komponenten der Kraftmessvorrichtung, welche ebenfalls über eine entsprechende Kontrolleinheit mit Datenkommunikation verfügen, auf die gleiche Weise gesteuert werden, beispielsweise eine Lichtschranke oder einen Hall-Sensor. So kann ein effizientes Kommunikationssystem mit mehreren Teilnehmern realisiert werden. Durch die Codierung der Informationen, beispielsweise als Binärcode oder ASCII-Code, können diese Informationen auf kompakte, effiziente Weise oder in einer universellen, vielseitig kompatiblen Form übertragen werden.

In einer bevorzugten Ausgestaltung weist die Kalibrier-Kontrolleinheit eine logische Schnittstelle auf, sodass die übertragenen Informationen gemäss einer vorgegebenen, insbesondere standardisierten, Spezifikation ausgetauscht werden können und/oder die Kalibrier-Kontrolleinheit (CCU) ist zum Austausch der Informationssignale (S_{CD}) gemäss einem, insbesondere standardisierten, Kommunikationsprotokoll ausgebildet. Dadurch kann die Kalibrier-Kontrolleinheit als universelles Bauteil in grosser Stückzahl und damit entsprechend kostengünstig hergestellt werden. Ausserdem stehen standardisierte Werkzeuge wie Testprogramme für Diagnose und Fehlerbehebung zur Verfügung.

Vorzugsweise ist die Kalibrier-Kontrolleinheit auf einer das Krafterzeugungsmittel tragenden Halterung oder Grundplatte angeordnet und/oder die Kalibrier-Kontrolleinheit ist derart angeordnet, dass die räumliche Distanz zwischen der Kalibrier-Kontrolleinheit und dem Krafterzeugungsmittel wesentlich kürzer als die räumliche Distanz zwischen der Kalibrier-Kontrolleinheit und der Verarbeitungseinheit ist. Dadurch kann eine sehr kompakte Bauform mit kurzen, robusten Steuerleitungen erreicht werden. Dabei beträgt die räumliche Distanz zwischen der Kalibrier-Kontrolleinheit und dem Krafterzeugungsmittel einige Millimeter bis einige Zentimeter. Die Kalibrier-Kontrolleinheit kann auch in unmittelbarer Nähe des Krafterzeugungsmittels angeordnet sein, beispielsweise durch direktes Zusammenbauen.

In einer weitern bevorzugten Ausgestaltung weist die Kalibriervorrichtung ein Anschlusselement auf, welches eine, insbesondere standardisierte, elektrische Schnittstelle zum Anschluss an die Kommunikationsverbindung bildet und/oder welches als trennbare Steckverbindung oder als Anschlussklemme ausgebildet ist. Dadurch ist ein besonders flexibler Austausch der Kalibriervorrichtung möglich, ohne dass aufwändige elektrische Anpassungen, beispielsweise Abgleichung der Impedanzen, erforderlich sind. Dabei ist vorzugsweise das Anschlusselement als trennbare Steckverbindung oder als Anschlussklemme ausgebildet, so dass ein schneller und bequemer Einbau oder Austausch der Kalibriervorrichtung möglich ist.

In einer weitern bevorzugten Ausgestaltung ist die Kalibriervorrichtung dazu ausbildet, aus den Informationssignalen Befehle abzuleiten, diese Befehle anhand vorgegebener Kriterien zu bewerten und gemäss den Ergebnissen der Bewertung das Krafterzeugungsmittel zu steuern. Solche Kriterien können beispielsweise durch einen vorgegeben Satz von Befehlen, durch eine Plausibilitäts-Grenzwerte oder durch Zustandsparameter der Kalibriervorrichtung vorgegeben sein. Vorzugsweise werden die Befehle durch Ausführung eines Programms bewertet. Dabei kann das Programm die Kriterien in Form von vorgegebenen Werten und/oder vorgegebenen Befehlen enthalten, beispielsweise als fest vorprogrammierte Werte oder als gespeicherte Werte, welche mittels des Programms aus einer Speichereinheit gelesen werden. Die Werte können auch dem Programm mittels Übermittlung zur Verfügung gestellt werden.

In einer besonders bevorzugten Ausgestaltung der Erfindung ist die Kalibrier-Kontrolleinheit programmierbar und/oder weist die Kalibrier-Kontrolleinheit ein Speicherelement auf, in welches Daten, Messwerte oder Programme gespeichert werden können. Dadurch kann die Kalibrier-Kontrolleinheit auf flexible Weise an neue Aufgabenstellungen und/oder geänderte Betriebsbedingungen angepasst werden. Die Daten können Informationen umfassen, die sowohl zum Betrieb und zur Überwachung der Kalibriervorrichtung als auch zur Kontrolle der Kommunikation benötigt werden. Beispielsweise können in dem Speicherelement das genaue Gewicht des Kalibrierkörpers oder Fertigungstoleranzen und/oder Lastspiele der Antriebsvorrichtung gespeichert werden. Diese Daten können zum Beispiel durch den Hersteller der Kalibriervorrichtung durch eine Eichung ermittelt und abgespeichert werden. Dieser Vorgang kann damit unabhängig vom Herstellerverfahren der Kraftmessvorrichtung durchgeführt werden.

Die gespeicherten Daten können auch eine eindeutige Identifikationsnummer umfassen, anhand welcher Mitteilungen an die Kalibrier-Kontrolleinheit adressiert oder Mitteilungen von der Kalibrier-Kontrolleinheit identifiziert werden können. Ferner ist denkbar, dass in der Speichereinheit Daten zur Diagnostik der Kalibriervorrichtung abgelegt werden, zum Beispiel die Anzahl der Betriebsstunden, das Überschreiten von Belastungs-Grenzwerten, Registrierung von überhöhten Temperaturen.

Ferner können auch Programme und Betriebsparameter der einzelnen Komponenten, insbesondere der Kalibrier-Kontrolleinheit selbst, in der Speichereinheit abgelegt werden. Ausserdem können Seriennummern, die Versionsnummer der einzelnen Komponenten, die Versionsnummer der Programme und die Versionsnummer der Kalibrierdaten gespeichert werden. Auf diese Daten kann einerseits die Kalibrier-Kontrolleinheit aber auch die Verarbeitungseinheit zugreifen. Durch die dezentrale Speicherung wird das Management dieser Informationen stark vereinfacht, besonders bei einem Austausch der Kalibriervorrichtung.

Vorzugsweise ist das Speicherelement als nicht-flüchtiger Speicher ausgebildet, so dass diese Daten auch bei einer Trennung der Stromversorgung erhalten bleiben. Ausserdem kann das Speicherelement zusammen mit der Kalibrier-Kontrolleinheit in einem Mikroprozessor integriert werden.

In einer bevorzugten Ausgestaltung weist die Kalibriervorrichtung eine Uhr auf, welche zur Bestimmung der zeitlichen Veränderung des mindestens einen Parameters dient, insbesondere um damit zeitliche Abläufe des Krafterzeugungsmittels, die Geschwindigkeit und/oder die Beschleunigung der Krafterzeugung, zu steuern. Dadurch kann eine präzise und spezifische Zuführung der vorgegeben Kraft erreicht werden. Die Uhr kann aber auch für weitere Funktionen eingesetzt werden, beispielsweise zur Kontrolle des Verhaltens der Kalibriervorrichtung oder zur Registrierung von Ereignissen, insbesondere das Auftreten von Fehlern.

In einer weiteren Ausgestaltung der Erfindung weist das Krafterzeugungsmittel ein Kalibriergewicht auf, welches der Erzeugung der vorgegeben Kraft dient und welches insbesondere beweglich angeordnet ist, um durch eine Positionsänderung an die Kraftmesszelle angekoppelt werden zu können. Da das Gewicht des Kalibriergewichts im Laufe der Zeit keine oder nur sehr geringe Änderungen erfährt kann damit eine gleichbleibende und stabile Kraftwirkung erzeugt werden. Somit kann eine von Alterserscheinungen weitgehend unabhängige Kalibrierung erreicht werden.

In einer weiteren, bevorzugten Ausgestaltung weist das Krafterzeugungsmittel eine Antriebseinheit, insbesondere einen Elektromotor, auf, welche zur Steuerung der Ankopplung der erzeugten Kraft dient, insbesondere indem mit der Antriebseinheit eine Positionsänderung eines Kalibrierkörpers erzeugbar ist. Dadurch kann das Krafterzeugungsmittel auf kostengünstige Weise aufgebaut und betrieben werden.

In einem weiteren Ausführungsbeispiel ist die Kalibriervorrichtung als modulare Einheit mit mindestens einer mechanischen Schnittstelle ausgebildet, welche insbesondere durch mindestens ein vorgegebenes Einbaumass und/oder einen Teil einer Schienenführung und/oder einen vorgegebenen Befestigungspunkt festgelegt ist. Somit kann ein hohes Mass an Austauschbarkeit erreicht und der Aufwand an mechanischen Anpassungen beim Austausch eliminiert oder zumindest stark reduziert werden.

In einer weiteren Ausgestaltung weist die Kalibriervorrichtung mindestens einen Sensor auf, welcher mit der Kalibrier-Kontrolleinheit verbunden ist und welcher ein elektrisches Signal erzeugt, das zur Steuerung des Krafterzeugungsmittels herangezogen werden kann. Dadurch kann eine bessere Reaktion auf zusätzliche Einflussfaktoren erreicht werden. Die Signale der Sensoren können aber auch als Informationen an die Verarbeitungseinheit übermittelt werden.

Vorzugsweise dient der Sensor einerseits der Ermittlung eines Betriebszustandes, insbesondere zur Ermittelung eines Lastspiels, einer Positionsänderung, einer Temperatur oder einer Strom-/Spannungsversorgung, oder andererseits zur Ermittlung eines äusseren Umgebungseinflusses, insbesondere zur Ermittlung einer Umgebungstemperatur und/oder einer mechanischen Störung und/oder einer Vibration. Dadurch können vielfältige Einflussfaktoren und Störungen erkannt und in geeigneter Weise bei der Steuerung des Krafterzeugungsmittels berücksichtigt werden.

Beispielsweise kann mit einem Sensor zur Messung des Lastspiels eine alters- und/oder verschleissbedingten Vergrösserung des Lastspiels festgestellt werden. Dementsprechend kann dann die Positionierung und damit die Ankopplung der Kalibriervorrichtung an die Kraftmesszelle oder der zeitliche Verlauf der Kraftzufuhr angepasst werden. Solche Vorgänge können aber auch an die Verarbeitungseinheit gemeldet und dort registriert werden. Solche Informationen können dann beispielsweise zur Planung von Wartungs- und Reparaturarbeiten herangezogen werden.

Ferner kann der Sensor zur Ermittlung einer Positionsänderung auch als Berührungsschalter oder als Lichtschranke ausgebildet sein. Dadurch kann das Erreichen einer Endposition des Krafterzeugungsmittels an die Kalibrier-Kontrolleinheit gemeldet werden. Solche Ereignisse sind primär von lokaler Bedeutung innerhalb der Kalibriervorrichtung und können dort auf spezifische Weise umgesetzt werden.

In einer bevorzugten Ausgestaltung ist die Kalibrier-Kontrolleinheit derart ausgestaltet, dass sie aufgrund der zur Verfügung stehenden Informationen autonome Entscheidungen bezüglich der Steuerung des Krafterzeugungsmittels treffen kann. Dadurch kann eine weitgehend selbstständige, unabhängige Kalibriervorrichtung erreicht werden, welche als autonome Einheit schnell, effizient und spezifisch auf die aktuell vorliegende Situation reagieren kann.

Eine weitere erfindungsgemässe Ausgestaltung der Erfindung betrifft eine Kraftmessvorrichtung mit einer Kraftmesszelle und der zuvor beschriebenen, in einer Einheit zusammengefassten Kalibriervorrichtung, welche während eines Kalibriervorgangs an die Kraftmesszelle gekoppelt ist, um dieser die vorgegebene Kraft zuzuführen, wobei die Kraftmesszelle, insbesondere über die Kommunikationsverbindung, mit einer Verarbeitungseinheit verbunden ist, um das von der Kraftmesszelle erzeugte Messsignal an diese zur Verarbeitung weiterzuleiten. Dabei wird die durch das Krafterzeugungsmittel erzeugte Kraft an die Kraftmesszelle geleitet. Die Kalibriervorrichtung bildet damit eine funktionale Einheit innerhalb der Kraftmessvorrichtung. Dadurch kann die Kalibriervorrichtung auf einfache Weise ausgewechselt und an die kundenspezifischen Anforderungen angepasst werden.

In einer bevorzugten Ausgestaltung ist die Verarbeitungseinheit dazu ausgebildet, den Parameter zu bestimmen und/oder zu berechnen und/oder an die Kalibrier-Kontrolleinheit diesen zu übertragen und/oder diesen von der Kalibrier-Kontrolleinheit auszulesen. Dadurch kann der Parameter oder der Parametersatz in der Verarbeitungseinheit bearbeitet und/oder ausgewertet oder kontrolliert werden. Dadurch kann eine individuell optimierte und flexible gegenseitige Anpassung von Kalibiervorrichtung und Kraftmessvorrichtung erreicht werden.

In einer bevorzugten Ausführung ist die Kommunikationsverbindung zur bidirektionalen und/oder digitalen Kommunikation und/oder als Bussystem und/oder als System zum paketförmigen Datenaustausch ausgebildet. Durch diese Form der Benutzung der Kommunikationsverbindung können Informationen auf flexible und kosteneffiziente Weise ausgetauscht werden. Insbesondere kann durch ein Bussystem der Aufwand zur Verkabelung gering gehalten werden. Ausserdem ist es möglich diese Kommunikationsverbindung auch für andere Komponenten der Kraftmessvorrichtung, zum Beispiel für weitere Messsensoren, zu verwenden.

In einer weiteren Ausgestaltung weist die Kalibriervorrichtung einen beweglichen Kalibrierkörper auf, sodass durch Bewegen des Kalibrierkörpers ein Kontakt mit einer Auflagestelle der Kraftmesszelle herstellbar ist, um die Kalibriervorrichtung an die Kraftmesszelle zu koppeln. Dadurch kann einerseits eine kraftschlüssige Verbindung während der Kalibrierung erreicht werden und andererseits können Störungen der Kraftmesszelle während des normalen Messbetriebs ausgeschlossen werden.

In einer weiteren erfindungsgemässen Ausführung ist der bewegliche Teil der Kraftmesszelle mit einem Kraftübertragungsarm starr verbunden, welcher an seinem freien Ende eine Auflagestelle aufweist, über welche die Kalibriervorrichtung an die Kraftmesszelle koppelbar ist. Durch diesen Kraftübertragungsarm kann eine grössere Gestaltungsfreiheit bei der Anordnung der Kraftmesszelle und der Kalibriervorrichtung erreicht werden.

Des Weiteren ist zu erwähnen, dass vorzugsweise auch die Stromversorgung der Kalibiervorrichtung über eine standardisierte elektrische Schnittstelle gebildet wird um einen hohen Grad an Flexibilität beim Austausch zu gewährleisten.

Einzelheiten der erfindungsgemässen Kraftmessvorrichtung, des erfindungsgemässen Kraftmessmoduls und des erfindungsgemässen Verfahrens ergeben sich anhand der Beschreibung der in den Zeichnungen dargestellten Ausführungsbeispiele. Es zeigen:
- Fig. 1: eine erfindungsgemässe Kraftmessvorrichtung 1 in Form einer Waage in beispielhafter Ausgestaltung mit symbolisch dargestellter, einwirkender Kraft F_{W}, einer Kraftaufnahme 30 und einer Anzeigeeinheit 70;
- Fig. 2: eine vereinfachte schematische Zeichnung einer Waage im Schnitt, mit einer Kraftmesszelle 10, an welche eine Kalibriervorrichtung 40 koppelbar ist, um der Kraftmesszelle 10 eine vorgegebene Kraft F_{C} zuzuführen;
- Fig. 3: ein weiteres Ausführungsbeispiel einer Kraftmesszelle 10 gemäss Figur 2, bei welcher die Kalibriervorrichtung 40 über zwei mechanische Schnittstellen 44a, 44b mit der Kraftmessvorrichtung 1 verbindbar ist und somit eine austauschbare modulare Einheit bildet;
- Fig. 4: ein vereinfachtes Blockschema der Waage gemäss Figur 2 mit einer Kommunikationsverbindung 52, um Informationssignale S_{CD} zwischen einer Kalibrier-Kontrolleinheit CCU der Kalibriervorrichtung 40 und einer Verarbeitungseinheit PU auszutauschen.

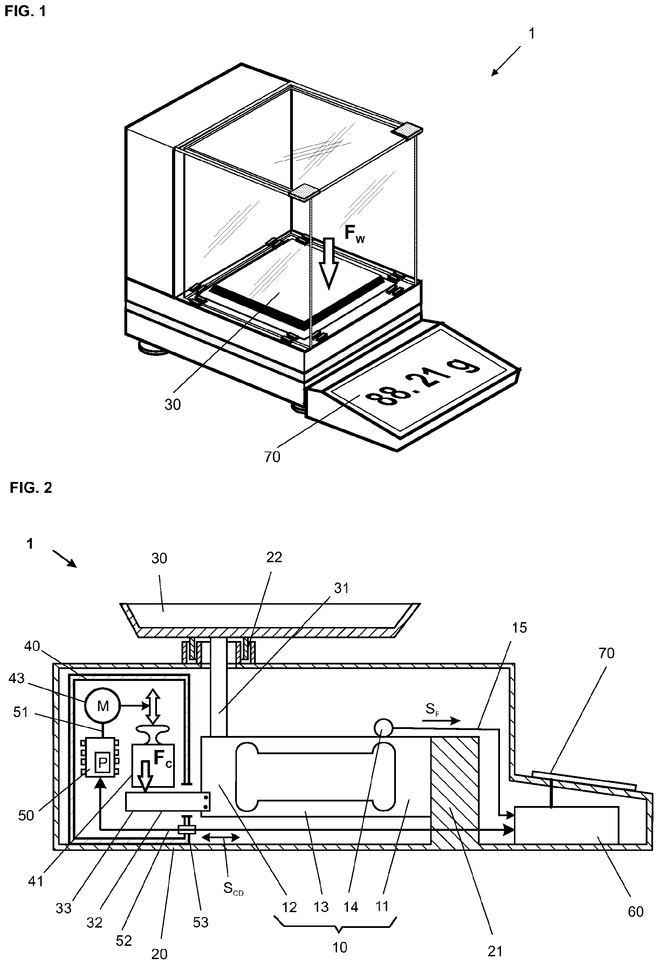

Figur 1 zeigt eine Kraftmessvorrichtung 1 in Form einer Waage in beispielhafter Ausgestaltung mit symbolisch dargestellter Einwirkung der Kraft F_{W}, welche auf die Kraftaufnahme 30 in Form einer Waagschale wirkt. Diese Kraft F_{W} wird mit der Kraftmessvorrichtung 1 gemessen und das Messeresultat durch eine Anzeigeeinheit 70, beispielsweise durch eine Flüssigkristallanzeige, an einen Benutzer kommuniziert.

Die Figur 2 zeigt eine vereinfachte schematische Zeichnung einer Kraftmessvorrichtung 1 in Form einer Waage im Schnitt. Die Waage weist ein Gehäuse 20 auf, in dessen Innenraum eine Kraftmesszelle 10 angeordnet ist.

Die Kraftmesszelle 10 weist einen feststehenden Teil 11 und einen beweglichen Teil 12 auf, die durch einen Mittelteil 13 miteinander über Biegestellen verbunden sind.

Ferner weist die Kraftmesszelle 10 einen Messsensor 14 auf, welcher die Bewegungen des beweglichen Teils 12 erfasst und in ein zu den Bewegungen korrespondierendes Messsignal S_{F} umwandelt. Der Einfachheit halber wird die Kraftmesszelle 10 nur mit einem Messsensor 14 dargestellt. Typischerweise werden jedoch vier Messsensoren 14 verwendet, jeweils einer an jeder Biegestelle zwischen dem Mittelteil 13 und dem feststehenden Teil 11 oder zwischen dem Mittelteil 13 dem beweglichen Teil 12. Als Messsensoren 14 werden bevorzugt Dehnmessstreifen eingesetzt.

Die Kraftmesszelle 10 ist mit ihrem feststehenden Teil 11 über den gehäusefesten Support 21 mit dem Gehäuse 20 starr verbunden. Eine ausserhalb des Gehäuses 20 angeordnete Kraftaufnahme 30 in Form einer Waagschale ist über ein Gestänge 31 mit dem im Innenraum angeordneten beweglichen Teil 12 der Kraftmesszelle 10 verbunden. Das Gestänge 31 durchdringt das Gehäuse 20 berührungsfrei durch eine Gehäusedurchführung 22. Die Gehäusedurchführung 22 ist derart ausgebildet, dass ein Eindringen von Verunreinigungen möglichst vermieden oder zumindest stark reduziert wird.

Der Messsensor 14 ist über eine Messsignal-Verbindung 15 mit einer Verarbeitungseinheit 60 verbunden, um das vom Messsensor 14 erzeugte Messsignal S_{F} an die Verarbeitungseinheit 60 weiterzuleiten. Die Verarbeitungseinheit 60 ist über die weitere Verbindungsleitung mit der Anzeigeeinheit 70 verbunden, um die von der Verarbeitungseinheit 60 ermittelten Messwerte an die Anzeigeeinheit 70 zu übermitteln.

In der Nähe der Kraftmesszelle 10 und ebenfalls im Innenraum eines Gehäuses 20 ist eine Kalibriervorrichtung 40 angeordnet. Die Kalibriervorrichtung 40 weist ein separates Gehäuse auf, in welchem ein Kalibriergewicht 41 beweglich angeordnet ist. Dabei kann das Kalibriergewicht 41 durch ein Antriebselement 43 angehoben und abgesenkt werden. Dabei ist das Antriebselement 43 als Elektromotor M ausgebildet, welcher durch entsprechende Steuersignale gesteuert wird, beispielsweise durch Schrittimpulse oder durch geeignete Steuerung der Stromversorgung.

Erfindungsgemäss weist die Kalibriervorrichtung 40 eine Kalibrier-Kontrolleinheit 50 auf. In der Kalibrier-Kontrolleinheit 50 ist ein Speicherelement angeordnet, in welches die Werte eines Parameters P gespeichert werden können. Der Parameters P steht damit als vorgegebener Wert der Kalibrier-Kontrolleinheit 50 zur Erzeugung der Steuersignale zur Verfügung. Dabei kann der Parameter P sowohl die Charakteristik der Kraftmessvorrichtung 1 als auch die Charakteristik der Kalibriervorrichtung 40 definieren. Das Speicherelement ist als nicht-flüchtiger Speicher ausgebildet, sodass die Kalibriervorrichtung 40 auf einfache Weise ohne Datenverlust ausgetauscht werden kann.

Die Kalibrier-Kontrolleinheit 50 ist einerseits über eine Verbindungsleitung mit einem Anschlusselement 53 verbunden. Das Anschlusselement 53 wiederum ist über eine Verbindungsleitung mit der Verarbeitungseinheit 60 verbunden. Diese Verbindungsleitungen bilden eine Kommunikationsverbindung, welche in diesem Ausführungsbeispiel als Kommunikationsleitung 52 ausgebildet ist. Dadurch können Informationssignale S_{CD} zwischen Kalibrier-Kontrolleinheit 50 und Verarbeitungseinheit 60 bidirektional ausgetauscht werden.

Andererseits ist die Kalibrier-Kontrolleinheit 50 mit dem Elektromotor M über eine Steuerleitung 51 verbunden, sodass der Elektromotor M mittels Steuersignalen gesteuert werden kann. Dabei werden die Steuersignale durch die Kalibrier-Kontrolleinheit 50 anhand der Informationssignale S_{CD} und des Parameters P erzeugt.

Am beweglichen Teil 12 der Kraftmesszelle 10 ist ein erstes Ende eines Kraftübertragungsarms 32 starr befestigt. Das zweite, entfernte Ende des Kraftübertragungsarms 32 bildet eine Auflagestelle 33, über welche eine vorgegebene Kraft F_{C} von der Kalibriervorrichtung 40 der Kraftmesszelle 10 zugeführt werden kann. Diese Kraft F_{C} wird dann unmittelbar über den Kraftübertragungsarm 32 an die Kraftmesszelle 10 weitergeleitet. Die vorgegebene Kraft F_{C} wirkt somit in ähnlicher Weise auf die Kraftmesszelle 10 wie das Gewicht des Wägeguts F_{W}, welches auf die Waagschale gelegt wird. In diesem Ausführungsbeispiel wird die vorgegebene Kraft F_{C} dadurch erzeugt, dass die Gewichtskraft des Kalibriergewichts 41 der Kalibriervorrichtung 40 auf die Auflagestelle 33 wirkt.

Dabei hat das Gehäuse der Kalibriervorrichtung 40 entsprechende Öffnungen in der Gehäusewand, sodass das zweite, entfernte Ende des Kraftübertragungsarms 32 in den Innenraum des Gehäuses ragt um die Gewichtskraft des Kalibriergewichts 41 aufzunehmen. Es können aber auch Teile des Kalibriergewichts 41 oder dessen Verlängerungen durch Öffnungen in der Gehäusewand, beispielsweise durch Langlöcher, aus dem Gehäuse der Kalibriervorrichtung 40 hinaus ragen um auf diese Weise das Kalibriergewicht 41 an den ausserhalb des Gehäuses befindlichen Kraftübertragungsarm 32 zu koppeln.

In Folgenden wird ein Kalibiervorgang kurz erläutert. Bei einem Kalibriervorgang sollte keine Kraft F_{W} auf die Kraftaufnahme 30 wirken. Somit sollten am Anfang des Kalibriervorgangs auch keine Kräfte auf die Kraftmesszelle 10 wirken.

Zu Beginn eines Kalibriervorgangs wird dann das Kalibriergewicht 41 mittels des Elektromotors M auf die Auflagestelle 33 abgesenkt. Dadurch werden zwei Funktionen ausgeführt: einerseits wird die Kalibriervorrichtung 40 an die Kraftmesszelle 10 gekoppelt und andererseits wird der Kraftmesszelle 10 eine vorgegebene Kraft F_{C}, nämlich die Gewichtskraft des Kalibriergewichts 41, zugeführt.

In der anschliessenden Phase wird das durch die Kraftmesszelle 10 erzeugte Messsignal S_{F} an die Verarbeitungseinheit 60 weitergeleitet und dort bezüglich der vorgegebenen Kraft F_{C} des Kalibriergewichts 41 ausgewertet. Mit den durch die Verarbeitung gewonnenen Resultaten werden dann die Berechnungsparameter in der Verarbeitungseinheit 60 optimiert. Diese Resultate können aber auch an die Anzeigeeinheit 70 oder an eine weitere Verarbeitungseinheit weitergeleitet werden.

Zum Abschluss des Kalibriervorgangs wird mittels des Elektromotors M das Kalibriergewicht 41 angehoben und damit von der Auflagestelle 33 entfernt. Somit wird die Kalibriervorrichtung 40 von der Kraftmesszelle 10 entkoppelt, so dass die Kraftmesszelle 10 während des normalen Messbetriebs nicht durch die Kalibriervorrichtung 40 beeinflusst werden kann. Beim anschliessenden normalen Messbetrieb werden dann die Messungen des Wägeguts anhand der optimiert Berechnungsparameter ausgewertet.

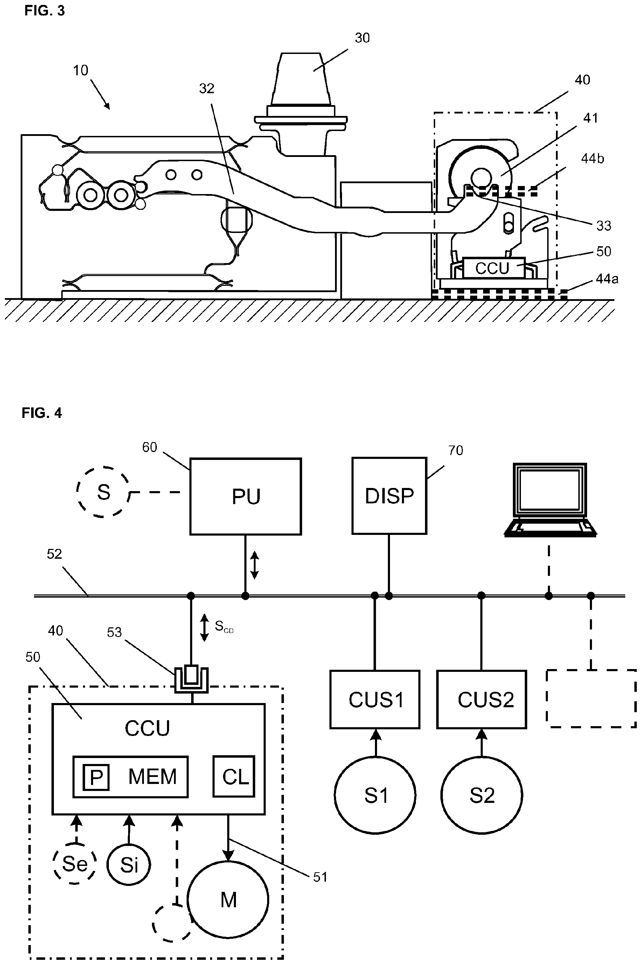

Figur 3 zeigt ein weiteres Ausführungsbeispiel einer Kraftmesszelle 10 gemäss Figur 2, bei welcher der Kraftübertragungsarm 32 als länglicher Arm mit einer Auflagestelle 33 in Form von Kerben ausgebildet ist. Das Kalibriergewicht 41 ist hantelförmig, so dass dessen Achse in die entsprechenden Kerben der Auflagestelle 33 abgesenkt werden kann. Ausserdem ist die Kraftaufnahme 30 als Befestigungsdorn ausgebildet, an welchem eine Waagschale befestigt werden kann.

Ferner weist die Kalibriervorrichtung 40 eine erste mechanische Schnittstellen 44a und eine zweite mechanische Schnittstellen 44b auf, welche in Figur 3 mittels gestrichelter Doppellinien angedeutet sind. Die erste mechanische Schnittstelle 44a definiert eine Anordnung der Kalibriervorrichtung 40 im Verhältnis zur Kraftmesszelle 10 gemäss einem vorgegebenen Mass. Dabei kann die erste mechanische Schnittstelle 44a in Form eines vorgegebenen Einbaumasses und/oder eines Teils einer Schienenführung und/oder Befestigungspunktes festgelegt sein. Ferner kann die Kalibriervorrichtung 40 als modulare Einheit in ein eigenes Gehäuse eingebaut sein, wobei die äusseren Abmessungen des Gehäuses ein vorgegebenes Einbaumass und/oder vorgegebene Befestigungspunkte aufweisen.

Die zweite mechanische Schnittstelle 44b dient zur Definition des vertikalen Abstands zwischen der Auflagestelle 33 für das Kalibriergewicht und der ersten mechanischen Schnittstelle 44a, sodass dieser einen vorgegebenen Wert aufweist. Durch die beiden mechanischen Schnittstellen 44a und 44b bildet die Kalibriervorrichtung 40 eine modulare Einheit, welche auf einfache Weise gegen eine andere Kalibriervorrichtung 40 ausgetauscht werden kann.

Die Kalibrier-Kontrolleinheit CCU ist in unmittelbarer Nähe unterhalb des Kalibriergewichts 41 angeordnet. Durch diese Nähe kann die Kalibriervorrichtung 40 als kompakte, platzsparende Einheit aufgebaut werden. Diese, mit einer strichpunktierten Linie umgrenzte Einheit, kann dadurch auf einfache Weise zu einer kompakten, eigenständigen Baugruppe zusammengefasst werden. Vorzugsweise ist diese Einheit auf einer Halterung oder Grundplatte angeordnet, welche die Kalibrier-Kontrolleinheit CCU und das Kalibriergewicht 41 trägt. Diese Baugruppe kann aber auch gemäss Figur 2 in ein eigenes Gehäuse separat von Gehäuse 20 der Kraftmessvorrichtung eingebaut sein.

Figur 4 zeigt ein vereinfachtes Blockschema der Waage gemäss Figur 2 mit einer Kommunikationsleitung 52, welche verschiedene funktionelle Einheiten der Kraftmessvorrichtung 1 miteinander verbindet. Diese funktionellen Einheiten sind in diesem Ausführungsbeispiel eine Verarbeitungseinheit PU, die Kalibrier-Kontrolleinheit CCU, die Anzeigeeinheit 70, eine mit einem ersten Sensor S1 verbundene erste Sensor-Kontrolleinheit CUS1 und eine mit einem zweiten Sensor S2 verbundene zweite Sensor-Kontrolleinheit CUS2. Der erste Sensor S1 kann beispielsweise ein Messsensor zur Bestimmung der einwirkenden Kraft sein, dessen Messsignal in der ersten Sensor-Kontrolleinheit CUS1 ausgewertet und an die Verarbeitungseinheit PU übertragen wird. Der zweite Sensor S2 kann ein Temperatursensor sein, dessen Signal in der zweiten Sensor-Kontrolleinheit CUS2 ausgewertet und ebenfalls an die Verarbeitungseinheit PU gesendet wird. Die Sensoren und deren zugehörige Kontrolleinheit können aber auch in beliebigen anderen Kombinationen angeordnet sein. Ferner kann auch ein Messsensor S, entsprechend Figur 1, über eine direkte Signalleitung mit der Verarbeitungseinheit 60 verbunden sein. Ausserdem können auch eine Anzeigeeinheit DISP und eine weitere Verarbeitungseinheit in Form eines Leitrechners an die Kommunikationsleitung 52 angeschlossen sein.

Die Kalibrier-Kontrolleinheit CCU ist über ein standardisiertes, elektrisches Anschlusselement 53 an die Kommunikationsleitung 52 angeschlossen. Dabei bildet das Anschlusselement 53 eine elektrische Schnittstelle, so dass verschiedene Kalibriervorrichtungen 40 ohne weitere Anpassungen der elektrischen Konfiguration an die Kommunikationsleitung 52 angeschlossen werden können. In diesem Fall ist das Anschlusselement 53 als trennbare Steckverbindung symbolisch dargestellt. Das Auswechseln der Kalibriervorrichtung 40 kann damit auf besonders einfache Weise durchgeführt werden.

In diesem Ausführungsbeispiel ist die Kommunikationsleitung 52 als digitales Bussystem ausgebildet, so dass digitale Informationssignale bidirektional zwischen den einzelnen funktionellen Einheiten ausgetauscht werden können. Das Bussystem besteht aus mehreren parallelen elektrischen Leitungen. Als Kommunikationsleitung 52 können aber auch andere Formen eingesetzt werden, beispielsweise eine elektrische serielle Leitung, eine Funkverbindung oder eine optische Verbindung. Vorzugsweise werden die Informationssignale S_{CD} in digitaler Form zwischen der Kalibrier-Kontrolleinheit CCU und einer Verarbeitungseinheit PU ausgetauscht. Dabei werden die Informationssignale S_{CD} vorzugsweise gemäss einem standardisierten Kommunikationsprotokoll übertragen.

Als Bussystem kann beispielsweise ein System gemäss dem I²C, Profibus oder Ethernet Standard verwendet werden. Die Informationssignale können die Informationen in Form von binären Daten, kodierten Befehlen und Mitteilungen oder als Klartext enthalten. Vorzugsweise ist der Umfang der Befehle und Mitteilungen in geeigneter aber ausreichender Weise auf das Wesentliche beschränkt, sodass sie auf universelle Weise von den verschiedensten Kalibrier-Kontrolleinheiten CCU umgesetzt werden können. Beispielsweise kann ein Befehl lauten "Absenken mit einer Geschwindigkeit von 10 mm/min" und die zurückgemeldete Mitteilung lauten: "Absenken abgeschlossen".

Die Kalibrier-Kontrolleinheit CCU weist zusätzlich ein Speicherelement MEM auf, in welchen Daten, Messwerte oder Programme gespeichert werden. Ausserdem wird der Parameter P in Speicherelement MEM abgelegt, sodass sowohl schreibend als auch lesend von der Kalibrier-Kontrolleinheit CCU auf die Werte des Parameter P zugegriffen werden kann. Die Daten umfassen alle Informationen, die sowohl zum Betrieb und zur Überwachung der Kalibriervorrichtung 40 als auch zur Kontrolle der Kommunikation benötigt werden. Auf die Daten des Speicherelements kann lesend und schreibend zugegriffen werden, sowohl direkt durch die Kalibrier-Kontrolleinheit CCU als auch ferngesteuert über die Kommunikationsleitung 52 durch die Verarbeitungseinheit PU. Vorzugsweise ist das Speicherelement MEM als nicht-flüchtiger Speicher ausgebildet und gegebenenfalls zusammen mit der Kalibrier-Kontrolleinheit CCU in Form eines Mikroprozessors umgesetzt.

Beispielsweise können diese Informationen den Typ des Elektromotors und dessen Charakteristik betreffen. Ferner können dort Daten zur Definition des Fahrverhaltens, insbesondere der zeitlichen Veränderung von Beschleunigung und Geschwindigkeit, abgelegt werden. Ausserdem ist denkbar, dass dort Daten zur Diagnostik der Kalibriervorrichtung 40 gespeichert werden, beispielsweise Daten welche über Überlastungen, Verschleisserscheinungen, Betriebstemperaturen oder Umgebungsbedingungen Auskunft geben. Ferner können diese Daten auch einen oder mehrere Identifikationscodes beinhalten, welcher der Adressierung und/oder Identifikation der Kalibriervorrichtung 40 während der Kommunikation dienen.

Des Weiteren weist die Kalibrier-Kontrolleinheit CCU eine Uhr CL auf, um damit die Geschwindigkeiten und/oder Beschleunigungen des Elektromotors M und damit die Bewegung des Kalibiergewichts zu steuern. Die Uhr CL kann aber auch für weitere Aufgaben eingesetzt werden, beispielsweise zur Kontrolle des Verhaltens der Kalibriervorrichtung 40 oder zur Registrierung von Ereignissen.

Ausserdem weist die Kalibriervorrichtung 40 einen Sensor Si auf, welcher mit der Kalibrier-Kontrolleinheit CCU verbunden ist. Dadurch werden die durch den Sensor Si erzeugten Signale an die Kalibrier-Kontrolleinheit CCU übertragen, wo sie zur Steuerung des Elektromotors M eingesetzt werden. So ist diesem Fall der Sensor Si als Lichtschranke ausgebildet, welche das Erreichen einer Endposition des Kalibriergewichts an die Kalibrier-Kontrolleinheit CCU meldet. Der Sensor kann auch in unmittelbarer Nähe des Elektromotors angeordnet sein (gestrichelte Linie) um beispielsweise den Drehwinkel der Drehachse des Elektromotors zu bestimmen. Ferner kann auch ein weiterer Sensor Se (gestrichelte Linie) in der Kalibriervorrichtung 40 angeordnet sein, welcher ebenfalls Informationen an die Kalibrier-Kontrolleinheit CCU übermittelt, beispielsweise das Auftreten von Vibrationen, sodass in diesem Fall die Geschwindigkeit des Elektromotors auf die Hälfte reduziert wird, um eine übermässige Belastung der anzukoppelnden Kraftmesszelle zu vermeiden.

Die erfindungsgemässe Kalibriervorrichtung 40 und die erfindungsgemässe Kraftmessvorrichtung 1 wurden in bevorzugten Ausgestaltungen beschrieben und dargestellt. Die Kraftmessvorrichtung wurde in der Ausgestaltung einer Waage 1 beschrieben. Die Erfindung ist jedoch auch bei anderen Kraftmessvorrichtungen, wie gravimetrischen Messgeräten, Wägemodulen, Lastzellen und Messsensoren, die gegebenenfalls Teil einer Waage bilden können, einsetzbar. Ferner sind die Vorrichtungen natürlich auch nicht auf eine bestimmte Wahl, Konfiguration, Gruppierung und Anwendung der Komponenten beschränkt.

### Bezugszeichenliste

- 1: Kraftmessvorrichtung
- 10: Kraftmesszelle
- 11: feststehender Teil
- 12: beweglicher Teil
- 13: Mittelteil
- 14: Messsensor
- 15: Messsignal-Verbindung
- 20: Gehäuse
- 21: Support
- 22: Gehäusedurchführung
- 30: Kraftaufnahme
- 31: Gestänge
- 32: Kraftübertragungsarm
- 33: Auflagestelle
- 40: Kalibriervorrichtung
- 41: Kalibriergewicht
- 43: Antriebseinheit
- 44a, 44b: mechanische Schnittstelle
- 50: Kalibrier-Kontrolleinheit
- 51: Steuerleitung
- 52: Kommunikationsverbindung/Kommunikationsleitung
- 53: Anschlusselement
- 60: Verarbeitungseinheit
- 61: Verbindungsleitung
- 70: Anzeigeeinheit

- CCU: Kalibrier-Kontrolleinheit
- CL: Uhr
- CUS1, CUS2: Sensor-Kontrolleinheit
- CW: Kalibriergewicht
- P: Parameter
- PU: Verarbeitungseinheit
- DISP: Anzeigeeinheit
- F_{W}: einwirkende Kraft
- F_{C}: vorgegebene Kraft
- M: Elektromotor
- MEM: Speicher
- S_{CD}: Informationssignal
- S_{F}: Messsignal
- S, S1, S2, Si, Se: Sensor

## Patentansprüche

1. Kraftmessvorrichtung (1) mit einer Kraftmesszelle (10), einer Verarbeitungseinheit (60, PU) und einer Kalibriervorrichtung (40), wobei die Kalibriervorrichtung (40) mit einem elektrisch steuerbaren Krafterzeugungsmittel versehen ist, welches derart an eine Kraftmesszelle (10) einer Kraftmessvorrichtung (1) koppelbar ist, dass der Kraftmesszelle (10) eine vorgegebene Kraft (F_{C}) zugeführt werden kann, sodass die Kraftmesszelle (10) ein Messsignal (S_{F}) erzeugt, welches zur zugeführten Kraft (F_{C}) korrespondiert und welches an die Verarbeitungseinheit (60, PU) weitergeleitet und dort bezüglich der vorgegebenen Kraft (F_{C}) verarbeitet werden kann,
und wobei die Kalibriervorrichtung (40) eine über eine Kommunikationsverbindung (52) mit der Verarbeitungseinheit (60, PU) verbindbare Kalibrier-Kontrolleinheit (CCU) aufweist,
**dadurch gekennzeichnet,**
**dass** die Kalibriervorrichtung (40) als eine modulare Einheit der Kraftmessvorrichtung (1) ausgebildet ist indem eine erste mechanische Schnittstelle (44a) die Anordnung der Kalibriervorrichtung (40) im Verhältnis zur Kraftmesszelle (10) gemäss einem vorgegebenen Mass definiert, indem eine zweite mechanische Schnittstelle (44b) den vertikalen Abstand zwischen dem Koppelort des Krafterzeugungsmittels an die Kraftmesszelle (10) und der ersten mechanischen Schnittstelle (44a) definiert, und indem mindestens eine elektrische Schnittstelle (53) einen Anschluss an die Stromversorgung und/oder Kommunikationsverbindung (52) bildet,
**und dass** die Kalibriervorrichtung (40) als eine funktionale Einheit innerhalb der Kraftmessvorrichtung ausgebildet ist indem die Kalibrier-Kontrolleinheit (CCU) ein Speicherelement (MEM) aufweist, in welchem mindestens ein vorgegebener, die Kraftmessvorrichtung (1) und/oder die Kalibriervorrichtung (40) charakterisierender Parameter (P) gespeichert ist, welcher der Kalibrier-Kontrolleinheit (CCU) zur Verfügung steht,indem die Kalibrier-Kontrolleinheit (CCU) über die Kommunikationsverbindung (52) mit der Verarbeitungseinheit (60, PU) Informationssignale (S_{CD}) bidirektional austauschen kann, und indem die Kalibrier-Kontrolleinheit (CCU) dazu ausgebildet ist, anhand der Informationssignale (S_{CD}) und des Parameters (P) Steuersignale zu erzeugen, um damit das Krafterzeugungsmittel zu steuern.

2. Kraftmessvorrichtung (1) nach Anspruch 1, wobei die Kalibrier-Kontrolleinheit (CCU) ein fest vorgegebenes oder ein veränderbares Programm aufweist, mit dem der mindestens eine Parameter (P) und die Informationssignale (S_{CD}) verarbeitet und die Steuersignale erzeugt werden können.

3. Kraftmessvorrichtung (1) nach Anspruch 1 oder 2, wobei die Kalibrier-Kontrolleinheit (CCU) dazu ausgebildet ist, den Parameter (P) durch den Austausch der Informationssignale (S_{CD}) von der Verarbeitungseinheit (60, PU) zu empfangen.

4. Kraftmessvorrichtung (1) nach einem der Ansprüche 1 bis 3, wobei der Parameter (P) den Typ der Kraftmessvorrichtung (1) oder das Funktionsprinzip oder den Messbereich oder die Messgenauigkeit oder die Stabilität der Messungen oder das vorgesehene Einsatzgebiet der Kraftmessvorrichtung (1) charakterisiert.

5. Kraftmessvorrichtung (1) nach einem der Ansprüche 1 bis 4, wobei der Parameter (P) den Typ oder die Funktionsweise der Kalibriervorrichtung (40) charakterisiert, insbesondere mindestens eine räumliche Dimension, welche die Ankopplung des Krafterzeugungsmittels an die Kraftmesszelle (10) definiert.

6. Kraftmessvorrichtung (1) nach einem der Ansprüche 1 bis 5, wobei der Parameter (P) den Typ des Krafterzeugungsmittels, insbesondere dessen Funktionsprinzip oder die Grösse der zu erzeugenden Kraft oder deren Änderungsgeschwindigkeit oder deren Änderungsbeschleunigung oder die Grösse des Verfahrwegs charakterisiert.

7. Kraftmessvorrichtung (1) nach einem der Ansprüche 1 bis 6, wobei die Kalibrier-Kontrolleinheit (CCU) für den Austausch der Informationssignale (S_{CD}) in digitaler und/oder codierter Form und/oder in bidirektionaler Richtung und/oder in paketförmiger Weise und/oder zum Anschluss an ein Bussystem ausgebildet ist.

8. Kraftmessvorrichtung (1) nach einem der Ansprüche 1 bis 7, wobei die Kalibrier-Kontrolleinheit (CCU) eine logische Schnittstelle aufweist, sodass die übertragenen Informationen gemäss einer vorgegebenen, insbesondere standardisierten, Spezifikation ausgetauscht werden können und/oder die Kalibrier-Kontrolleinheit (CCU) zum Austausch der Informationssignale (S_{CD}) gemäss einem, insbesondere standardisierten, Kommunikationsprotokoll ausgebildet ist.

9. Kraftmessvorrichtung (1) nach einem der Ansprüche 1 bis 8, wobei diese eine Uhr (CL) aufweist, welche zur Bestimmung der zeitlichen Veränderung des mindestens einen Parameters (P) dient, insbesondere um damit zeitliche Abläufe des Krafterzeugungsmittels, insbesondere die Geschwindigkeit und/oder die Beschleunigung der Krafterzeugung, zu steuern.

10. Kraftmessvorrichtung (1) nach einem der Ansprüche 1 bis 9, wobei das Krafterzeugungsmittel ein Kalibriergewicht (41), aufweist, welches der Erzeugung der vorgegeben Kraft (F_{C}) dient und welches beweglich angeordnet ist, um durch eine Positionsänderung an die Kraftmesszelle (10) angekoppelt werden zu können.

11. Kraftmessvorrichtung (1) nach einem der Ansprüche 1 bis 10, wobei die Kalibrier-Kontrolleinheit (CCU) auf einer das Krafterzeugungsmittel tragenden Halterung oder Grundplatte angeordnet ist und/oder die Kalibrier-Kontrolleinheit (CCU) derart angeordnet ist, dass die räumliche Distanz zwischen der Kalibrier-Kontrolleinheit (CCU) und dem Krafterzeugungsmittel wesentlich kürzer ist als die räumliche Distanz zwischen der Kalibrier-Kontrolleinheit (50) und der Verarbeitungseinheit (60, PU).

12. Kraftmessvorrichtung (1) nach einem der Ansprüche 1 bis 11, wobei die Kalibriervorrichtung (40) mindestens einen Sensor (Si, Se) aufweist, welcher mit der Kalibrier-Kontrolleinheit (CCU) verbunden ist und welcher ein elektrisches Signal erzeugt, das zur Steuerung des Krafterzeugungsmittels herangezogen werden kann, wobei der Sensor (Si, Se) einerseits der Ermittelung eines Betriebszustandes dient, insbesondere eines Lastspiels, einer Positionsänderung, einer Temperatur oder einer Strom-/Spannungsversorgung, oder andererseits zur Ermittelung eines äusseren Umgebungseinflusses dient, insbesondere einer Umgebungstemperatur und/oder einer mechanischen Störung und/oder Vibration.

13. Kraftmessvorrichtung (1) nach einem der Ansprüche 2 bis 12, wobei die Kalibrier-Kontrolleinheit (CCU) derart ausgestaltet ist, dass sie aufgrund der zur Verfügung stehenden Informationen autonome Entscheidungen bezüglich der Steuerung des Krafterzeugungsmittels treffen kann.

14. Kraftmessvorrichtung (1) nach einem der Ansprüche 1 bis 13, wobei die Verarbeitungseinheit (60, PU) dazu ausgebildet ist, den Parameter (P) zu bestimmen und/oder zu berechnen und/oder diesen an die Kalibrier-Kontrolleinheit (CCU) zu übertragen und/oder diesen von der Kalibrier-Kontrolleinheit (CCU) auszulesen.

15. Waage mit einer Kraftmessvorrichtung (1) nach einem der Ansprüche 1 bis 14

## Claims

1. A force-measuring device (1) having a force-measuring cell (10), a processing unit (60 PU), and a calibration device (40), wherein the calibration device (40) is provided with an electrically controllable force-generating means, which can be coupled to a force-measuring cell (10) of a force measuring device (1) such that a predefined force (FC) can be applied to the force-measuring cell (10) so that the force-measuring cell (10) generates a measuring signal (SF) which corresponds to the applied force (FC) and which can be transmitted to the processing unit (60, PU), where it can be processed with respect to the predefined force (FC), and wherein the calibration device (40) comprises a calibration control unit (CCU) which can be connected via a communications link (52) to the processing unit (60, PU),
**characterized in that**
the calibration device (40) is configured as a modular unit of the force measuring device (1) in that a first mechanical interface (44a) defines the positioning of the calibration device (40) in relation to the force-measuring cell (10) according to a predetermined dimension, **in that** a second mechanical interface (44b) defines the vertical distance between the coupling location of the force-generating means on the force-measuring cell (10) and the first mechanical interface (44a), and **in that** at least one electrical interface (53) forms a connection to the power supply and/or the communications link (52),
**and in that** the calibration device (40) is configured as a functional unit within the force-measuring device, wherein the calibration control unit (CCU) comprises memory element (MEM) in which at least one predefined parameter (P) characterizing the force-measuring device (1) and/or the calibration device (40) is stored and is available to the calibration control unit (CCU), wherein the calibration control unit (CCU) is able to exchange information signals (SCD) bidirectionally with the processing unit (60, PU) via the communications link (52), and wherein the calibration control unit (CCU) is configured to generate control signals for controlling the force-generating means based on the information signals (SCD) and the parameter (P).

2. The force-measuring device (1) according to Claim 1, wherein the calibration control unit (CCU) comprises a predefined fixed program or a modifiable program, with which the at least one parameter (P) and the information signals (SCD) can be processed and the control signals can be generated.

3. The force-measuring device (1) according to Claim 1 or 2, wherein the calibration control unit (CCU) is configured to receive the parameter (P) from the processing unit (60, PU) by the exchange of information signals (SCD).

4. The force-measuring device (1) according to any one of Claims 1 to 3, wherein the parameter (P) characterizes the type of the force-measuring device (1) or the functioning principle or the measurement range or the measurement accuracy or the stability of the measurements or the intended area of application of the force-measuring device (1).

5. The force-measuring device (1) according to any one of Claims 1 to 4, wherein the parameter (P) characterizes the type or the functioning principle of the calibration device (40), in particular at least one spatial dimension that defines the coupling of the force-generating means to the force-measuring cell (10).

6. The force-measuring device (1) according to any one of Claims 1 to 5, wherein the parameter (P) characterizes the type of the force-generating means, in particular its functional principle, or the magnitude of the force to be generated, or the rate of change or acceleration of change of the force, or the length of the displacement path.

7. The force-measuring device (1) according to any one of Claims 1 to 6, wherein the calibration control unit (CCU) is configured to exchange the information signals (SCD) in digital and/or encoded form and/or bidirectionally and/or in the form of data packets, and/or is configured for connection to a bus system.

8. The force-measuring device (1) according to any one of Claims 1 to 7, wherein the calibration control unit (CCU) comprises a logic interface, so that the transmitted information can be exchanged according to a predefined, in particular a standardized specification, and/or the calibration control unit (CCU) is configured to exchange the information signals (SCD) in accordance with a communications protocol, in particular a standardized communications protocol.

9. The force-measuring device (1) according to any one of Claims 1 to 8, wherein said device comprises a clock (CL) for determining the change over time of the at least one parameter (P), in particular to thereby control the time-dependent behavior of the force-generating means, in particular the speed and/or the acceleration of force generation.

10. The force-measuring device (1) according to any one of Claims 1 to 9, wherein the force-generating means comprises a calibration weight (41), which serves to generate the predefined force (FC) and which is arranged movably so as to be coupled to the force-measuring cell (10) as a result of a change in position.

11. The force-measuring device (1) according to any one of Claims 1 to 10, wherein the calibration control unit (CCU) is arranged on a holder or base plate that supports the force-generating means, and/or the calibration control unit (CCU) is arranged such that the spatial distance between the calibration control unit (CCU) and the force-generating means is significantly shorter than the spatial distance between the calibration control unit (50) and the processing unit (60, PU).

12. The force-measuring device (1) according to any one of Claims 1 to 11, wherein the calibration device (40) comprises at least one sensor (Si, Se) which is connected to the calibration control unit (CCU) and which generates an electrical signal which can be used to control the force-generating means, wherein the sensor (Si, Se) serves to detect an operating state, in particular a load cycle, a position change, a temperature or a current/voltage supply, or to detect an external environmental influence, in particular an ambient temperature and/or a mechanical disturbance and/or vibration.

13. The force-measuring device (1) according to any one of Claims 2 to 12, wherein the calibration control unit (CCU) is configured such that it is able to make autonomous decisions regarding the control of the force-generating means on the basis of the available information.

14. The force-measuring device (1) according to any one of Claims 1 to 13, wherein the processing unit (60, PU) is configured to determine and/or calculate the parameter (P) and/or to transmit the parameter to the calibration control unit (CCU) and/or to read the parameter from the calibration control unit (CCU).

15. A weighing device comprising a force-measuring device (1) according to any one of Claims 1 to 14.

## Revendications

1. Dispositif de mesure de force (1) avec une cellule de mesure de force (10), une unité de traitement (60, PU) et un dispositif de calibrage (40), dans lequel le dispositif de calibrage (40) est doté d'un moyen de génération de force à commande électrique, lequel peut être couplé à une cellule de mesure de force (10) d'un dispositif de mesure de force (1) de sorte qu'une force prédéfinie (FC) peut être amenée à la cellule de mesure de force (10), si bien que la cellule de mesure de force (10) génère un signal de mesure (SF), lequel correspond à la force amenée (FC) et lequel peut être transmis à l'unité de traitement (60, PU) et y être traité par rapport à la force prédéfinie (FC), et dans lequel le dispositif de calibrage (40) présente une unité de contrôle de calibrage (CCU) pouvant être reliée à l'unité de traitement (60, PU) par le biais d'une liaison de communication (52),
**caractérisé en ce que**
le dispositif de calibrage (40) est réalisé en tant qu'unité modulaire du dispositif de mesure de force (1) par le fait qu'une première interface mécanique (44a) définit l'agencement du dispositif de calibrage (40) par rapport à la cellule de mesure de force (10) selon une mesure prédéfinie, par le fait qu'une deuxième interface mécanique (44b) définit la distance verticale entre le lieu de couplage du moyen de génération de force au niveau de la cellule de mesure de force (10) et la première interface mécanique (44a), et par le fait qu'au moins une interface électrique (53) forme un raccordement à l'alimentation électrique et/ou liaison de communication (52),
et que le dispositif de calibrage (40) est réalisé en tant qu'unité fonctionnelle à l'intérieur du dispositif de mesure de force par le fait que l'unité de contrôle de calibrage (CCU) présente un élément de mémoire (MEM), dans lequel au moins un paramètre (P) prédéfini, caractérisant le dispositif de mesure de force (1) et/ou le dispositif de calibrage (40) est enregistré, lequel est à la disposition de l'unité de contrôle de calibrage (CCU), par le fait que l'unité de contrôle de calibrage (CCU) peut échanger de manière bidirectionnelle des signaux d'information (SCD) avec l'unité de traitement (60, PU) par le biais de la liaison de communication (52), et par le fait que l'unité de contrôle de calibrage (CCU) est réalisée pour générer des signaux de commande à l'aide des signaux d'information (SCD) et du paramètre (P) pour commander ainsi le moyen de génération de force.

2. Dispositif de mesure de force (1) selon la revendication 1, dans lequel l'unité de contrôle de calibrage (CCU) présente un programme prédéfini de manière fixe ou un programme modifiable, avec lequel l'au moins un paramètre (P) et les signaux d'information (SCD) peuvent être peuvent être traités et les signaux de commande générés.

3. Dispositif de mesure de force (1) selon la revendication 1 ou 2, dans lequel l'unité de contrôle de calibrage (CCU) est réalisée pour recevoir le paramètre (P) par l'échange des signaux d'information (SCD) de l'unité de traitement (60, PU).

4. Dispositif de mesure de force (1) selon l'une quelconque des revendications 1 à 3, dans lequel le paramètre (P) caractérise le type du dispositif de mesure de force (1) ou le principe de fonctionnement ou la zone de mesure ou la précision de mesure ou la stabilité des mesures ou le domaine d'utilisation prévu du dispositif de mesure de force (1).

5. Dispositif de mesure de force (1) selon l'une quelconque des revendications 1 à 4, dans lequel le paramètre (P) caractérise le type ou le mode de fonctionnement du dispositif de calibrage (40), en particulier au moins une dimension spatiale, laquelle définit l'accouplement du moyen de génération de force au niveau de la cellule de mesure de force (10).

6. Dispositif de mesure de force (1) selon l'une quelconque des revendications 1 à 5, dans lequel le paramètre (P) caractérise le type du moyen de génération de force, en particulier son principe de fonctionnement ou la grandeur de la force à générer ou sa vitesse de changement ou son accélération de changement ou la grandeur de la course.

7. Dispositif de mesure de force (1) selon l'une quelconque des revendications 1 à 6, dans lequel l'unité de contrôle de calibrage (CCU) est réalisée pour l'échange des signaux d'information (SCD) sous forme numérique et/ou codée et/ou en direction bidirectionnelle et/ou sous forme de paquet et/ou pour le raccordement à un système de bus.

8. Dispositif de mesure de force (1) selon l'une quelconque des revendications 1 à 7, dans lequel l'unité de contrôle de calibrage (CCU) présente une interface logique, si bien que les informations transmises peuvent être échangées selon une spécification prédéfinie, en particulier standardisée et/ou l'unité de contrôle de calibrage (CCU) est réalisée pour l'échange des signaux d'information (SCD) selon un protocole de communication, en particulier standardisé.

9. Dispositif de mesure de force (1) selon l'une quelconque des revendications 1 à 8, dans lequel celui-ci présente une montre (CL), laquelle sert à la détermination du changement temporel de l'au moins un paramètre (P), en particulier pour commander des déroulements temporels du moyen de génération de force, en particulier la vitesse et/ou l'accélération de la génération de force.

10. Dispositif de mesure de force (1) selon l'une quelconque des revendications 1 à 9, dans lequel le moyen de génération de force présente un poids de calibrage (41), lequel sert à la génération de la force prédéfinie (FC) et lequel est agencé mobile pour pouvoir être accouplé par un changement de position à la cellule de mesure de force (10).

11. Dispositif de mesure de force (1) selon l'une quelconque des revendications 1 à 10, dans lequel l'unité de contrôle de calibrage (CCU) est agencée sur une fixation ou plaque de base portant le moyen de génération de force et/ou l'unité de contrôle de calibrage (CCU) est agencée de sorte que la distance spatiale entre l'unité de contrôle de calibrage (CCU) et le moyen de génération de force est sensiblement plus petite que la distance spatiale entre l'unité de contrôle de calibrage (50) et l'unité de traitement (60, PU).

12. Dispositif de mesure de force (1) selon l'une quelconque des revendications 1 à 11, dans lequel l'unité de calibrage (40) présente au moins un capteur (Si, Se), lequel est relié à l'unité de contrôle de calibrage (CCU) et lequel génère un signal électrique, qui peut être utilisé pour la commande du moyen de génération de force, dans lequel le capteur (Si, Se) sert d'un côté à la détermination d'un état de fonctionnement, en particulier d'un jeu de charge, d'un changement de position, d'une température ou d'une alimentation en courant/tension, ou d'un autre côté à la détermination d'une influence environnementale extérieure, en particulier d'une température ambiante et/ou d'un dérangement mécanique et/ou vibration.

13. Dispositif de mesure de force (1) selon l'une quelconque des revendications 2 à 12, dans lequel l'unité de contrôle calibrage (CCU) est configurée de sorte qu'elle peut prendre des décisions autonomes par rapport à la commande du moyen de génération de force sur la base des informations disponibles.

14. Dispositif de mesure de force (1) selon l'une quelconque des revendications 1 à 13, dans lequel l'unité de traitement (60, PU) est réalisée pour déterminer et/ou calculer le paramètre (P) et/ou le transmettre à l'unité de contrôle de calibrage (CCU) et/ou le lire de l'unité de contrôle de calibrage (CCU).

15. Balance avec un dispositif de mesure de force (1) selon l'une quelconque des revendications 1 à 14.
